# EUROPÄISCHE PATENTSCHRIFT

(11) **EP 0 722 874 B1**
(45) Veröffentlichungstag und Bekanntmachung des Hinweises auf die Patenterteilung: **02.12.1998**
(21) Anmeldenummer: 95117775.7
(22) Anmeldetag: 11.11.1995
(51) Int. Cl.: B61D 17/20

(54) **Flexible Verkleidung eines Übergangs**
Flexible liner of a communication passage
Revêtement flexible d'un passage d'intercommunication

(30) Priorität: 19.01.1995 DE 29500695 U
(43) Veröffentlichungstag der Anmeldung: 24.07.1996
(73) Patentinhaber: HÜBNER Gummi- und Kunststoff GmbH, D-34123 Kassel (DE)
(72) Erfinder: Goebels, André, D-34134 Kassel (DE)
(74) Vertreter: Walther, Robert, Dipl.-Ing.

(56) Entgegenhaltungen:
- DE-A- 3 035 159
- DE-A- 3 634 641
- GB-A- 631 539

## Beschreibung

Die Erfindung betrifft eine flexible Seitenwandabdeckung für einen mit einem Balg versehenen Übergang zwischen zwei verbundenen Fahrzeugen, wobei die Seitenwandabdeckung als Platte ausgestaltet und in sich elastisch nachgiebig ausgebildet ist.

Aus der DE-A 30 35 159 ist ein Faltenbalg bekannt, der, wie jeder Faltenbalg, Eckbereiche aufweist, wobei in den bogenförmigen Eckbereichen die Gewebeeinlage in besonderer Weise ausgebildet sein soll, um eine besondere Dehnung des Balges gerade in diesem Bereich zu ermöglichen.

Die DE-A 36 34 641 zeigt einen Faltenbalg, der in den abgerundeten Übergangsbereichen innerhalb des Balges Einsätze aufweist, deren Material in Balgumfangsrichtung deutlich dehnfähiger ist als das der Balgwände.

Aus der GB 631 539 ist eine tunnelförmige Verbindung zwischen zwei gelenkig miteinander gekuppelten Fahrzeugen bekannt, bei der ein hüllförmiger Körper vorgesehen ist, der aus einem in sich elastisch nachgiebigen Material besteht. Das heißt, daß bei Kurvenfahrt sich die eine Seitenwand eines derartigen Hüllkörpers ähnlich einem Gummiband auseinanderzieht, während die andere gegenüberliegende Seitenwand eines derartigen Hüllkörpers unter Bildung einer Wölbung zusammengeschoben wird.

Aus der EP-A 625 459 ist eine Seitenwandabdeckung eines Übergangs mit einem Faltenbalg der eingangs genannten Art bekannt, bei der die Seitenwandabdeckung als Platte in sich elastisch nachgiebig und um die Hochachse in Richtung der Mitte des Übergangs gewölbt ausgebildet ist. Um insbesondere einem Höhenversatz der Fahrzeuge nachgeben zu können, ist vorgesehen, daß die Seitenwandabdeckung durch elastische Elemente mit dem Wagenkasten in Verbindung steht. Als elastische Elemente werden insbesondere Verbindungselemente aus Gummi verwendet.

Die Verbindung der elastischen Elemente mit der gegenüber den elastischen Elementen relativ steiferen Seitenwandabdeckung ist aufwendig, da gesonderte Verbindungselemente erforderlich sind.

Der Erfindung liegt daher die Aufgabe zugrunde, eine Seitenwandabdeckung der eingangs genannten Art derart weiterzubilden, daß diese einfach und preiswert in der Herstellung ist und die darüber hinaus in der Lage ist, sämtlichen auftretenden Bewegungen der Fahrzeuge relativ zueinander nachgeben zu können.

Die Aufgabe wird erfindungsgemäß dadurch gelöst, daß die einteilige Seitenwandabdeckung eine durchgehende steife Trägerschicht aufweist und im Querschnitt parallel dazu eine zweite Schicht, die im Randbereich, das heißt, im Bereich der Halterung eine weiche und damit elastische Einlage und die im Mittenbereich, d. h. im Bereich der Übergangsmitte eine Mittenschicht aus steifem Material aufweist. Das heißt, daß die Seitenwandabdeckung im Längsseitenbereich bzw. Randbereich, d. h. in dem Bereich, wo sie vom Wagenkasten aufgenommen wird, sehr viel weicher und damit nachgiebiger ist als im Mittenbereich. Eine solche Seitenwandabdeckung besitzt den Vorteil, daß sie aufgrund der Trägerschicht aus steifem und damit härterem Material in wesentlich geringerem Maße für Zerstörungen anfällig ist. Die härtere, steifere Schicht kann hierbei aus einem Polycarbonat, einem duro- oder thermoplastischen Material bestehen. Für die weichere Schicht ist insbesondere Gummi vorgesehen. Das Maß der Flexibilität ist hierbei auch abhängig von den Materialstärken der einzelnen Schichten. Durch die stufenförmige Ausbildung der weicheren Schicht im Randbereich wird die Verbindung mit der steiferen Schicht im Mittenbereich der Abdeckung verbessert. Darüber hinaus wird durch die Abstufung eine Übergangszone zwischen dem weicheren Seitenwandbereich und dem härteren Mittenbereich geschaffen, durch den ein Knicken bei Biegebeanspruchung vermieden wird. Wie weit die weichere Schicht zur Mitte der Abdeckung reicht, ist abhängig von dem jeweiligen Einsatzzweck, also inwieweit eine Verformung der Abdeckung erforderlich ist. Daraüber hinaus ist im Innenbereich die Abdeckung zur Dekoration mit einer Folie versehen.

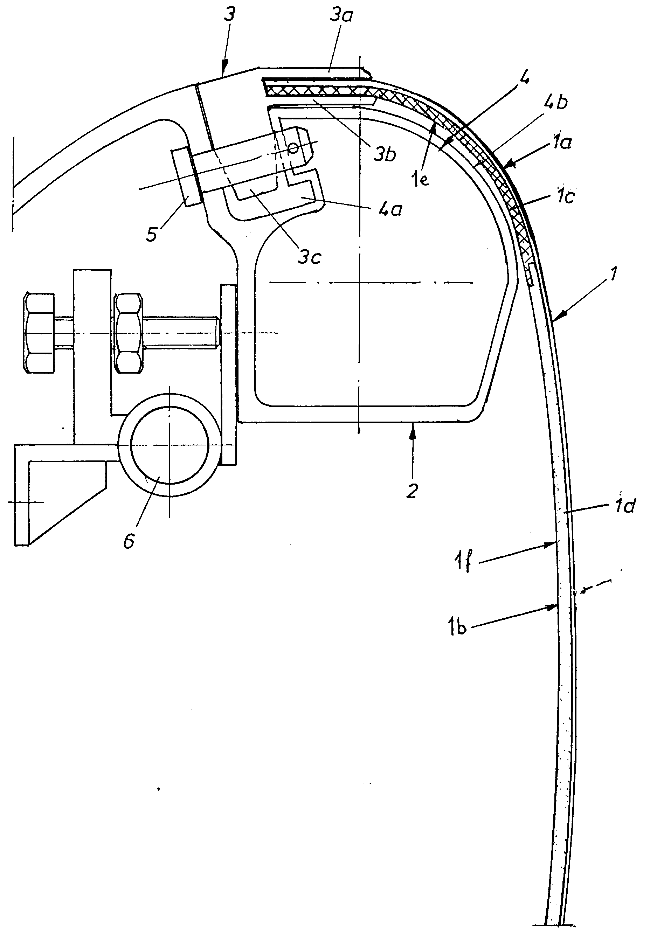

Anhand der Zeichnung wird die Erfindung nachstehend beispielhaft näher erläutert.

Die Seitenwandabdeckung 1 wird durch die Halterung 2 aufgenommen. Die Halterung 2 umfaßt eine Klemmspange 3, wobei durch die beiden Schenkel 3a, 3b der Spange 3 die Seitenwandabdeckung klemmend erfaßt wird. Die Halterung 2 umfaßt darüber hinaus einen walzenförmigen Rahmen 4, der die Klemmspange 3 lösbar aufnimmt. Hierzu besitzt der Rahmen 4 eine Nut 4a, in die der Ansatz 3c der Klemmspange 3 hineinragt, wobei zur Befestigung des Ansatzes 3c in der Nut 4a ein Bolzen 5 vorgesehen ist. Der walzenförmige Rahmen 4 ist verschwenkbar mit dem Federscharnier 6 gekoppelt, das mit dem Wagenkasten (nicht dargestellt) verbunden ist.

Die Seitenwandabdeckung 1 weist über ihre Fläche eine unterschiedliche Flexibilität auf. Im Bereich des walzenförmigen Rahmens 4, und hier insbesondere im Bereich der Wölbung 4b des Rahmens, ist die Seitenwandabdeckung flexibel ausgebildet. Dies wird im wesentlichen durch einen Aufbau der Abdeckung erreicht, der sich durch folgende Merkmale auszeichnet: Die Abdeckung besitzt eine Trägerschicht 1a aus steifem Material, z. B aus Polycarbonat oder GFK; parallel zu dieser Schicht ist eine zweite Schicht 1b vorgesehen, die im Randberich 1e eine weiche, elastische Einlage 1c aufweist, wobei die Einlage derart abgestuft gehalten ist, daß im Bereich der Übergangsmitte 1f die Mittenschicht 1d aus härterem Material formschlüssig von der Einlage 1c erfaßbar ist. Festzuhalten ist, daß eine derart ausgebildete Seitenwandabdeckung mit der elastischen Ausbildung im Längsseitenbereich in der Lage ist, sämtlichen auftretenden Fahrbewegungen zweier gelenkig miteinander verbundener Fahrzeuge nachzugeben.

## Patentansprüche

1. Flexible Seitenwandabdeckung für einen mit einem Balg versehenen Übergang zwischen zwei verbundenen Fahrzeugen, wobei die Seitenwandabdeckung als Platte ausgestaltet und in sich elastisch nachgiebig ausgebidet ist,
**dadurch gekennzeichnet**, daß
die einteilige Seitenwandabdeckung eine durchgehende steife Trägerschicht (1a) aufweist und im Querschnitt parallel dazu eine zweite Schicht (1b), die im Randbereich (1e), das heißt, im Bereich einer Halterung (2) eine weiche und damit elastische Einlage (1c) und die im Mittenbereich, d. h. im Bereich der Übergangsmitte (1f), eine Mittenschicht (1d) aus steifem Material aufweist.

2. Abdeckung nach Anspruch 1,
**dadurch gekennzeichnet**, daß
die Einlage (1c) zur Mitte hin abgestuft ausgebildet ist, und die Mittenschicht (1d) aus steiferem Material formschlüssig erfaßt.

3. Abdeckung nach einem oder mehrerer der voranstehenden Ansprüche,
**dadurch gekennzeichnet**, daß
die eine härtere Schicht (1a, 1d) aus einem Polycarbonat oder einem duro- oder thermoplastischen Material besteht.

4. Abdeckung nach einem oder mehrerer der voranstehenden Ansprüche,
**dadurch gekennzeichnet**, daß
die Einlage (1c) aus einem Gummiwerkstoff besteht.

## Claims

1. Flexible side wall cover for a connecting corridor between two linked vehicles provided with a bellows, whereas the side wall cover is designed as a supply yielding plate,
**characterized in that** the side wall cover which is made of one piece is provided with a thorough stiff supporting layer (1a) and with a second layer (1b), parallel in section to the first one and having on its edges (1e), that means in the area of the holding device (2), a soft and thus flexible intermediate layer (1c) having in its center, i.e. in the area of the connecting corridor's center (1f), a central layer (1d) made of stiff material.

2. Cover according to claim 1,
**characterized in that** the insert (1c) is graded towards the centre of the cover, thereby positively locking the central layer (1d) made of stiffer material.

3. Cover according to one or more of the previous claims,
**characterized in that** the harder layer (1a, 1d) is made of a polycarbonate, duromer or thermoplastic material.

4. Cover according to one or more of the previous claims,
**characterized in that** the insert (1c) is made of a rubber material.

## Revendications

1. Revêtement de paroi latérale flexible destiné à une passerelle d'intercommunication à soufflet entre deux véhicules articulés, le revêtement de paroi latérale ayant la forme d'une plaque souple et élastique,
**caractérisé en ce que** le revêtement de paroi latérale fait d'une seule pièce possède une couche porteuse continue rigide (1a) ainsi que, parallèle en section à cette première couche, une seconde couche (1b) pourvue sur les bords (1e), c'est-à-dire à l'endroit d'une fixation (2), d'une insertion (1c) souple et donc élastique et en son centre, c'est-à-dire au centre de la passerelle (1f), d'une couche centrale (1d) en matière rigide.

2. Revêtement selon la revendication 1,
**caractérisé en ce que** l'insertion (1c) est conçue en gradins vers le centre, ce qui lui permet de saisir positivement la couche centrale (1d) faite d'une matière plus rigide.

3. Revêtement selon une ou plusieurs des revendications précédentes,
**caractérisé en ce que** l'une des couches plus dures (1a, 1d) est faite de polycarbonate ou d'une matière thermodurcissable ou thermoplastique.

4. Revêtement selon une ou plusieurs des revendications précédentes,
**caractérisé en ce que** l'insertion (1c) est faite de caoutchouc.
